# FASCICULE DE BREVET EUROPEEN

(11) **EP 1 380 411 B1**
(45) Date de publication et mention de la délivrance du brevet: **13.05.2020**
(21) Numéro de dépôt: 03291466.5
(22) Date de dépôt: 17.06.2003
(51) Int. Cl.: B32B 1/08, F16L 9/12, C08L 77/00

(54) **Utilisation de tuyaux flexibles à base de polymère thermoplastique et de polyoléfine pour l'exploitation des champs de pétrole ou de gaz**
Verwendung von flexiblen Röhren aus thermoplastischem Kunststoff und Polyolefin für die Öl- und Gasgewinnung
Use of flexible pipes made of thermoplastic polymer and polyolefin for oil and gas fields

(30) Priorité: 24.06.2002 FR 0207779
(43) Date de publication de la demande: 14.01.2004
(73) Titulaire: ARKEMA FRANCE, 92700 Colombes (FR)
(72) Inventeur: Werth, Michael, 27300 Bernay (FR)
(74) Mandataire: Schaefer, Anne-Sophie

(56) Documents cités:
- EP-A- 0 638 749
- US-A- 5 858 492
- US-A1- 2002 036 405
- F A Dawans ET AL: "Improved Thermoplastic Materials for Offshore Flexible Pipes", OTC 5231, 1 January 1986 (1986-01-01), pages 91-99, XP055503707, 18th Annual OTC, Houston, Texas
- J. D. Stables: "A More Realistic Method for Predicting the Compatibility of Thermoplastic Hoses When Used in Subsea Umbilical Systems", , 3 May 1993 (1993-05-03), pages 103-113, XP055589988, 25th Annual OTC, Houston, Texas, U.S.A. Retrieved from the Internet: URL:https://www.onepetro.org/download/conf erence-paper/OTC-7272-MS?id=conference-pap er/OTC-7272-MS [retrieved on 2019-05-20]

## Description

### [Domaine de l'invention]

La présente invention concerne l'utilisation de tuyaux flexibles à base de polymère thermoplastique et de polyoléfine pour l'exploitation des champs de pétrole ou de gaz. Dans l'exploitation des gisements de pétrole ou de gaz sous la mer (off shore) il est nécessaire d'utiliser des tuyaux flexibles pour relier les différents dispositifs autour de la plateforme. Ces tuyaux doivent résister au pétrole chaud, au gaz, à l'eau et aux mélanges d'au moins deux de ces produits pendant des durées pouvant atteindre 20 ans. Ces tuyaux sont en général constitués d'une couche intérieure métallique non étanche formée par une bande en métal profilée enroulée en hélice telle qu'un feuillard agrafé et qui donne la forme au tuyau, puis sur cette couche on extrude un polymère pour donner l'étanchéité et enfin on ajoute d'autres couches de protection et de renfort telles que des nappes de fibres métalliques et des caoutchoucs. Pour des températures de service en dessous de 40°C le polymère est du HDPE (polyéthylène haute densité), jusqu'à 90°C c'est du polyamide et au delà jusqu'à 130°C c'est du PVDF (polyfluorure de vinylidène). Le diamètre extérieur de ces tuyaux peut atteindre 400 à 450 mm. La présente invention concerne aussi des tuyaux flexibles appelés habituellement "ombilicaux" qui servent à transporter différents fluides utiles dans l'exploitation des champs off shore. Ces fluides peuvent être du méthanol ou des fluides hydrauliques. Ces ombilicaux sont en général de diamètre beaucoup plus faible, par exemple 20 à 100 mm, que les flexibles qui transportent le gaz ou le pétrole. Ils sont constitués d'une ou plusieurs couches de matériaux thermoplastiques (par exemple polyamide, polyetherester ou polyuréthane) et recouverts d'une couche de renfort en fibres métalliques ou textiles et enfin d'une ou plusieurs couches de protection.

L'utilisation du PA 11 dans les flexibles off shore est décrit dans : OTC 5231 «Improved thermoplastic materials for offshore flexible pipes » F. Dawns, J. Jarrin, T. Lefevre, M. Pelisson IFP et Coflexip Houston 1986

L'utilisation du PA 11 dans les ombilicaux off shore est décrit dans : "A more realistic method for predicting the compatibility of thermoplastic hoses when used in subsea umbilical systems" J.D. Stables, I.R. Dodge, D. MacRaild OTC 7272 1993.

Dans la suite du texte tous ces tuyaux seront désignés par le terme "flexibles off shore".

### [l'art antérieur et le problème technique]

Les flexibles qu'on utilise pour transporter le gaz ou le pétrole des gisements off shore sont en polyamide quand la température de service est environ entre 40 et 90°C. Cependant il est nécessaire parfois de nettoyer ces flexibles en y faisant circuler du méthanol par exemple pour enlever les hydrates. L'inconvénient du méthanol est qu'il pénètre fortement dans le polyamide. Il y a donc des pertes de méthanol mais aussi il peut extraire le plastifiant et/ou les modifiants du polyamide ce qui conduit à une dégradation des propriétés mécaniques et un vieillissement prématuré du flexible. Les ombilicaux peuvent être en polyamide, en polyetherester ou en polyuréthane et ils sont utilisés entre autres pour injecter du méthanol ou de l'éthanol dans le réseau de flexibles. comme pour les flexibles ci dessus le méthanol pénètre dans le polyamide, le polyetherester ou le polyuréthane et conduit aux mêmes inconvénients. Les pertes de méthanol ou d'éthanol peuvent aussi provoquer des incendies. Les ombilicaux sont utilisés aussi pour le contrôle hydraulique et l'injection de liquides anti-corrosion, anti-paraffine, biocides et anti-croutes. On a besoin d'une bonne résistance chimique de ces ombilicaux.

L'art antérieur a déjà décrit des tuyaux à base de polyamide et résistant aux essences alcoolisées.

La demande de brevet EP 982122 A2 décrit un tuyau comprenant une couche de polyamide et une couche d'un mélange de polyakylène naphténate et de polyisocyanate. Ce tuyau est peu perméable à un mélange constitué (en poids) de 42,5% d'isooctane, de 42,5% de toluène et de 15% de méthanol.

Le brevet US 5858492 décrit un tuyau multicouches comprenant nécessairement une couche de PVDF (polyfluorure de vinylidène) et une couche d'un mélange de polyamide et de polyglutarimide.

La demande de brevet EP 470606 A1 décrit dans l'exemple 5 un tuyau pour le transport d'essence et constitué d'une couche intérieure de 800 µm en PA 6 modifié choc, d'une couche de 100 µm en polypropylène greffé et d'une couche de 100 µm en polyéthylène haute densité (HDPE) chargée de noir de carbone.

La demande de brevet EP 731307 A1 décrit des tubes en polyéthylène recouverts à l'extérieur d'une fine couche d'un polymère barrière. Le polymère barrière peut être du polyamide. L'épaisseur du polyéthylène peut être de 30 à 60 mm pour les tubes de diamètre extérieur jusqu'à 800 mm et de 2 à 6 mm pour les petits tubes de l'ordre de 20 mm de diamètre extérieur tandis que l'épaisseur du polyamide est comprise entre 50 et 1000 µm. Ces tubes sont utiles comme tubes enterrés pour transporter de l'eau potable dans des terrains pollués.

La demande de brevet US 2002/0036405 A1 décrit des tubes constitués de polyéthylène et de polyamide pour la distribution du gaz à basse et moyenne pression. Ils sont constitués de polyéthylène recouvert de polyamide à l'extérieur. Éventuellement un liant peut être disposé entre le polyamide et le polyéthylène. Le but de la couche de polyamide est de faciliter le raccordement des tubes, on utilise un manchon qui a un diamètre intérieur égal au diamètre extérieur des tubes à raccorder et on colle avec un solvant. Alors que des tubes en polyéthylène se raccordent difficilement par des soudures du polyéthylène sur lui-même ou nécessitent un système encombrant de brides. L'avantage des tubes recouverts de polyamide est que les raccords à manchons collés sont de faible encombrement ce qui est primordial quand on rénove un réseau de gaz à l'origine en acier en y introduisant les tubes en polyéthylène recouverts de polyamide. Selon une variante le tube de polyéthylène peut être recouvert de polyamide à l'intérieur, le manchon de raccordement est alors tel que son diamètre extérieur est égal au diamètre intérieur des tubes à raccorder. On peut aussi disposer à la fois une couche de polyamide à l'intérieur et à l'extérieur du polyéthylène. Au § 15 on précise que l'épaisseur du polyéthylène varie de 0,5 à 30 mm pour des diamètres allant jusqu'à 300 mm. Au § 48 on précise que l'épaisseur du polyamide est de préférence entre 250 µm et 1 mm. Il est donc bien clair que ces tubes sont essentiellement en polyéthylène. On explique aussi au § 58 que des tubes comprenant dans l'ordre 0,5 mm de polyéthylène, 0,1 mm de liant et 2,4 mm de PA 11 à l'intérieur résistent aux gaz liquéfiés et aux condensats.

La demande de brevet EP 0638749 A1 décrit l'utilisation de tuyaux flexibles pour l'exploitation des gisements de pétrole ou de gaz sous la mer (offshore) dans lesquels les couches d'étanchéité comprennent dans cet ordre :
- Une couche intérieure formée d'au moins un polymère thermoplastique
- Une couche de polyoléfine.

Aucun de ces documents n'a décrit le problème technique de la présente invention ni des flexibles off shore. On a maintenant trouvé qu'en disposant dans la structure du flexible au moins une couche de polyéthylène en plus du polyamide, polyetherester ou du polyuréthane on réduit significativement le passage du méthanol au travers du flexible.

### [Brève description de l'invention]

La présente invention concerne l'utilisation de tuyaux flexibles pour l'exploitation des gisements de pétrole ou de gaz sous la mer (offshore) dans lesquels les couches d'étanchéité comprennent dans cet ordre :
- une couche intérieure formée d'au moins un polymère thermoplastique (A), ledit polymère thermoplastique (A) étant choisi parmi les mélanges de polyamide et de polyoléfine à matrice polyamide, les copolymères à blocs polyamide et blocs polyether, les mélanges de polyamides et de copolymères à blocs polyamide et blocs polyether, les polyetheresters, les polyuréthanes et les polyamides, ces polyamides étant choisis parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12,
- une couche de liant de coextrusion, ledit liant étant une polyoléfine fonctionnalisée portant une fonction acide carboxylique ou anhydride d'acide carboxylique éventuellement mélangée avec une polyoléfine non fonctionnalisée,
- une couche de polyoléfine.

Le terme "couche intérieure" veut dire que cette couche est au contact du fluide transporté dans le tuyau bien que physiquement dans la plupart des flexibles la couche réellement à l'intérieur est le flexible métallique non étanche.

L'invention concerne aussi l'utilisation de ces flexibles pour transporter des fluides sur les champs d'extraction de pétrole et de gaz off shore.

### [Description détaillée de l'invention]

**S'agissant du polymère thermoplastique (A)** il peut être choisi parmi les polyamides, les mélanges de polyamide et de polyoléfine à matrice polyamide, les copolymères à blocs polyamide et blocs polyether, les mélanges de polyamides et de copolymères à blocs polyamide et blocs polyether, les polyetheresters et les polyuréthanes.

**On entend par polyamide** les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
- ou des mélanges de certains de ces monomères ce qui conduit à des copolyamides, par exemple le PA-6/12 par condensation du caprolactame et du lauryllactame.

Avantageusement le polyamide est un polyamide choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12. De préférence ils ont une masse moléculaire moyenne en nombre *M̅n̅* en général supérieure ou égale à 12000 et avantageusement comprise entre 15000 et 50000. Leur masse moléculaire moyenne en poids *M̅w̅* est en général supérieure à 24000 et avantageusement comprise entre 30000 et 100000. Leur viscosité inhérente (mesurée à 20°C pour un échantillon de 5.10-3 g par cm3 de méta-crésol) est en général supérieure à 0,9.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer :
le PA 6-12 résultant de la condensation de l'hexaméthylène diamine et de l'acide 1,12-dodecanedioïque,
le PA 9-12 résultant de la condensation de la diamine en C9 et de l'acide 1,12-dodecanedioïque,
le PA 10-10 résultant de la condensation de la diamine en C10 et de l'acide 1,10-decanedioïque,
le PA 10-12 résultant de la condensation de la diamine en C9 et de l'acide 1,12-dodecanedioïque.

Quant aux copolyamides 11/12 ayant soit plus de 90% de motifs 11 soit plus de 90% de motifs 12, ils résultent de la condensation de l'acide amino 1-undecanoïque avec le lauryllactame (ou l'alpha omega amino acide en C12).

Avantageusement le polyamide contient un catalyseur organique ou minéral qu'on a ajouté au cours de la polycondensation. De préférence c'est de l'acide phosphorique ou hypophosphorique. La quantité de catalyseur peut être jusqu'à 3000 ppm par rapport à la quantité de polyamide et avantageusement entre 50 et 1000 ppm.

On ne sortirait pas du cadre de l'invention en utilisant un mélange de polyamides.

Avantageusement le polyamide est le PA 11 ou le PA 12.

Le polyamide peut être plastifié. S'agissant du plastifiant il est choisi parmi les dérivés de benzène sulfonamide, tels que le n-butyl benzène sulfonamide (BBSA), l'éthyl toluène sulfonamide ou le N-cyclohexyl toluène sulfonamide; les esters d'acides hydroxy-benzoïques, tels que le parahydroxybenzoate d'éthyl-2 hexyle et le parahydroxybenzoate de décyl-2 hexyle ; les esters ou éthers du tétrahydrofurfuryl alcool, comme l'oligoéthylèneoxytétrahydrofurfurylalcool ; et les esters de l'acide citrique ou de l'acide hydroxy-malonique, tels que l'oligoéthylèneoxy malonate. Un plastifiant particulièrement préféré est le n-butyl benzène sulfonamide (BBSA). On ne sortirait pas du cadre de l'invention en utilisant un mélange de plastifiants. Le plastifiant peut être introduit dans le polyamide pendant la polycondensation ou ultérieurement. La proportion de plastifiant peut être de 0 à 30 % en poids pour respectivement 100 à 70 % de polyamide et avantageusement 5 à 20%.

**Quant aux mélanges de polyamide et de polyoléfine à matrice polyamide,** le polyamide peut être l'un des polyamides cités plus haut et la polyoléfine peut être fonctionnalisée ou non fonctionnalisée ou être un mélange d'au moins une fonctionnalisée et/ou d'au moins une non fonctionnalisée. Pour simplifier on a décrit plus loin des polyoléfines fonctionnalisées (B1) et des polyoléfines non fonctionnalisées (B2).

**Les copolymères à blocs polyamides et blocs polyéthers** résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatiques appelées polyétherdiols.
3) Séquences polyamides à bouts de chaînes dicarboxyliques avec des polyétherdiols, les produits obtenus étant, dans ce cas particulier, des polyétheresteramides. Les copolymères de l'invention sont avantageusement de ce type.

Les séquences polyamides à bouts de chaînes dicarboxyliques proviennent par exemple de la condensation de précurseurs de polyamides en présence d'un diacide carboxylique limiteur de chaîne.

Les séquences polyamides à bouts de chaînes diamines proviennent par exemple de la condensation de précurseurs de polyamides en présence d'une diamine limiteur de chaîne.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

On peut aussi faire réagir du polyétherdiamine, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

La quantité de blocs polyéther dans ces copolymères à blocs polyamides et blocs polyéthers est avantageusement de 10 à 70% en poids du copolymère et de préférence de 35 à 60%.

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne diacide pour faire les polymères à blocs polyamides et blocs polyéthers ayant des motifs répartis de façon statistique.

La masse molaire en nombre *M̅n̅* des séquences polyamides est comprise entre 500 et 10000 et de préférence entre 500 et 4000 sauf pour les blocs polyamides du deuxième type. La masse *M̅n̅* des séquences polyéther est comprise entre 100 et 6 000 et de préférence entre 200 et 3 000.

Ces polymères à blocs polyamides et blocs polyéthers qu'ils proviennent de la copolycondensation de séquences polyamides et polyéthers préparées auparavant ou d'une réaction en une étape présentent, par exemple, une viscosité intrinsèque entre 0,8 et 2,5 mesurée dans le métacrésol à 25°C pour une concentration initiale de 0,8 g/100 ml.

**S'agissant des polyetheresters** ce sont des copolymères à blocs polyesters et blocs polyéthers. Ils sont constitués de blocs polyéthers souples qui sont les restes de polyétherdiols et de segments rigides (blocs polyesters) qui résultent de la réaction d'au moins un diacide carboxylique avec au moins un motif diol court allongeur de chaine. Les blocs polyesters et les blocs polyéthers sont reliés par des liaisons esters résultant de la réaction des fonctions acides de l'acide avec les fonctions OH du polyétherdiol. Le diol court allongeur de chaîne peut être choisi dans le groupe constitué du neopentylglycol, du cyclohexanediméthanol et des glycols aliphatiques de formule HO(CH₂)ₙOH dans laquelle n est un entier valant de 2 à 10. Avantageusement les diacides sont des acides dicarboxyliques aromatiques ayant de 8 à 14 atomes de carbone. Jusqu'à 50 % en mole de l'acide aromatique dicarboxylique peut être remplacé par au moins un autre acide aromatique dicarboxylique ayant de 8 à 14 atomes de carbone, et/ou jusqu'à 20 % en mole peut être remplacé par un acide aliphatique dicarboxylique ayant de 2 à 12 atomes de carbone.

A titre d'exemple d'acides aromatiques dicarboxyliques on peut citer l'acide téréphtalique, isophtalique, bibenzoïque, naphtalène dicarboxylique, l'acide 4,4'-diphénylenedicarboxylique, l'acide bis(p-carboxyphényl) méthane, l'éthylène bis p-benzoïque acide, l'acide 1-4 tétraméthylène bis(p-oxybenzoïque), l'acide éthylène bis (para oxybenzoïque), l'acide 1,3-triméthylène bis (p-oxybenzoique). A titre d'exemple de glycols on peut citer l'éthylène glycol, le 1,3 triméthylène glycol, le 1,4-tétraméthylèneglycol, le 1,6-hexaméthylène glycol, le 1,3 propylène glycol, le 1,8 octaméthylèneglycol, le 1,10-decaméthylène glycol et le 1,4-cyclohexylène dimethanol. Les copolymères à blocs polyesters et blocs polyéther sont par exemple des copolymères ayant des motifs polyéthers dérivés de polyétherdiols tels que le polyéthylène glycol (PEG), le polypropylène glycol (PPG) ou le polytétraméthylène glycol (PTMG), des motifs diacide carboxylique tels que l'acide téréphtalique et des motifs glycol (éthane diol) ou butane diol, 1-4. L'enchaînement des polyéthers et des diacides forme les segments souples alors que l'enchaînement du glycol ou du butane diol avec les diacides forme les segments rigides du copolyétherester. De tels copolyétheresters sont décrits dans les brevets EP 402 883 et EP 405 227. Ces polyétheresters sont des élastomères thermoplastiques. Ils peuvent contenir des plastifiants.

**S'agissant des polyuréthanes** ils sont constitués de blocs polyethers souples qui sont des restes de polyetherdiols et de blocs rigides (polyuréthanes) qui résultent de la réaction d'au moins un diisocyanate avec au moins un diol court. Le diol court allongeur de chaîne peut être choisi parmi les glycols cités plus haut dans la description des polyétheresters. Les blocs polyuréthanes et les blocs polyéthers sont reliés par des liaisons résultant de la réaction des fonctions isocyanates avec les fonctions OH du polyétherdiol.

On peut encore citer les polyesteruréthannes par exemple ceux comprenant des motifs diisocyanates, des motifs dérivés de polyesters diols amorphes et des motifs dérivés d'un diol court allongeur de chaîne. Ils peuvent contenir des plastifiants.

On peut utiliser des mélanges d'au moins 2 de ces polymères (A). Le polymère thermoplastique peut contenir des additifs usuels tels que des antioxydants.

**S'agissant du liant éventuel** on désigne ainsi tout produit qui permet l'adhésion de la couche de polymère thermoplastique (A). Avantageusement le liant est une polyoléfine fonctionnalisée portant une fonction acide carboxylique ou anhydride d'acide carboxylique. Elle peut être mélangée avec une polyoléfine non fonctionnalisée.
Pour simplifier on a décrit ci dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE(linear low density polyéthylène, ou polyéthylène basse densité lineaire), VLDPE(very low density polyéthylène, ou polyéthylène très basse densité) et le polyéthylène métallocène .
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides ou anhydrides. À titre d'exemple, on peut citer les polyoléfines précédentes (B2) greffées ou co- ou ter polymérisées par des acides carboxyliques ou les sels ou esters correspondants tels que l'acide (méth)acrylique ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids de comonomères .

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique.

A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :
- les copolymères éthylène/(méth)acrylate d'alkyle / acide (méth)acrylique ou anhydride maléique;
- les copolymères éthylène/acétate de vinyle/anhydride maléique;
- les copolymères éthylène/acétate de vinyle ou (méth)acrylate d'alkyle / acide (méth)acrylique ou anhydride maléique.

Le terme "(méth)acrylate d'alkyle" dans (B1) ou (B2) désigne les méthacrylates et les acrylates d'alkyle en C1 à C12, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement, les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique tel que le propylène, le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions acide carboxylique ou anhydride d'acide carboxylique. A titre d'exemples de tels polymères, on peut citer les ter polymères de l'éthylène, d'acrylate d'alkyle et d'anhydride maléique comme les Lotader® de la Demanderesse ou des polyoléfines greffées par de l'anhydride maléique comme les Orevac® de la Demanderesse ainsi que des ter polymères de l'éthylène, d'acrylate d'alkyle et d'acide (meth) acrylique.

**A titre de premier exemple de liant** on peut citer les mélanges comprenant :
- 5 à 30 parties d'un polymère (D) lui-même comprenant un mélange d'un polyéthylène (D1) de densité comprise entre 0,910 et 0,940 et d'un polymère (D2) choisi parmi les élastomères, les polyéthylènes de très basse densité et les polyéthylènes métallocènes, le mélange (D1) + (D2) étant cogreffé par un acide carboxylique insaturé,
- 95 à 70 parties d'un polyéthylène (E) de densité comprise entre 0,910 et 0,930,
- le mélange de (D) et (E) étant tel que :
   ▪ sa densité est comprise entre 0,910 et 0,930,
   ▪ la teneur en acide carboxylique insaturé greffé est comprise entre 30 et 10000 ppm,
   ▪ le MFI (ASTM D 1238 - 190°C - 2,16 kg) est compris entre 0,1 et 3 g / 10 min Le MFI désigne l'indice d'écoulement à l'état fondu.

La densité du liant est avantageusement comprise entre 0,915 et 0,920. Avantageusement (D1) et (E) sont des LLDPE , de préférence ils ont le même comonomere. Ce comonomère peut être choisi parmi est le 1-héxène, le 1-octène et le 1-butène. L'acide carboxylique insaturé peut être remplacé par un anhydride d'acide carboxylique insaturé.

**A titre de deuxième exemple de liant** on peut citer les mélanges comprenant:
- 5 à 30 parties d'un polymère (F) lui-même comprenant un mélange d'un polyéthylène (F1) de densité comprise entre 0,935 et 0,980 et d'un polymère (F2) choisi parmi les élastomères, les polyéthylènes de très basse densité et les copolymères de l'éthylène, le mélange (F1) + (F2) étant cogreffé par un acide carboxylique insaturé,
- 95 à 70 parties d'un polyéthylène (G) de densité comprise entre 0,930 et 0,950,
- le mélange de (F) et (G) étant tel que :
   ▪ sa densité est comprise entre 0,930 et 0,950 et avantageusement entre 0,930 et 0,940,
   ▪ la teneur en acide carboxylique insaturé greffé est comprise entre 30 et 10000 ppm,
   ▪ le MFI (indice d'écoulement à l'état fondu) mesuré selon ASTM D 1238 à 190°C - 21,6 kg est compris entre 5 et 100.

L'acide carboxylique insaturé peut être remplacé par un anhydride d'acide carboxylique insaturé.

**A titre de troisième exemple de liant** on peut citer les mélanges constitués d'un polyéthylène de type HDPE, LLDPE, VLDPE ou LDPE, 5 à 35 % d'un polyéthylène métallocène greffé (par un acide carboxylique insaturé ou un anhydride d'acide carboxylique insaturé) et 0 à 35 % d'un élastomère, le total étant 100%.

**A titre de quatrième exemple de liant** on peut citer les mélanges comprenant :
- 5 à 35 parties d'un polymère (S) lui-même constitué d'un mélange de 80 à 20 parties d'un polyéthylène métallocène (S1) de densité comprise entre 0,865 et 0,915 et de 20 à 80 parties d'un polyéthylène LLDPE (S2) non métallocène, le mélange (S1) + (S2) étant cogreffé par un acide carboxylique insaturé,
   - 95 à 65 parties d'un polyéthylène (T) choisi parmi les polyéthylènes homo ou copolymères et les élastomères,
- le mélange de (S) et (T) étant tel que :
   ▪ la teneur en acide carboxylique insaturé greffé est comprise entre 30 et 100000 ppm,
   ▪ le MFI (ASTM D 1238 - 190°C - 2,16 kg) est compris entre 0,1 et 10 g / 10 min. Le MFI désigne l'indice d'écoulement à l'état fondu et s'exprime en grammes par 10 minutes.

L'acide carboxylique insaturé peut être remplacé par un anhydride d'acide carboxylique insaturé.

**S'agissant de la couche de polyoléfine** elle peut être choisie parmi les polyoléfines non fonctionnalisées (B2) définies plus haut. Avantageusement on utilise le polyéthylène de haute densité. Le polyéthylène haute densité (HDPE) est décrit dans le KIRK-OTHMER, 4ème édition, Vol 17, pages 704 et 724-725. Il s'agit selon ASTM D 1248-84 d'un polymère de l'éthylène ayant une densité au moins égale à 0,940. L'appellation HDPE concerne à la fois les homopolymères de l'éthylène et ses copolymères avec de faibles proportions d'a-oléfine. La densité est avantageusement comprise entre 0,940 et 0,965. Dans la présente invention le MFI du HDPE est avantageusement compris entre 0,1 et 50. A titre d'exemple on peut citer le Lacqtène® 2001 TN 46.

On ne sortirait pas du cadre de l'invention si la polyoléfine est un mélange de deux au moins des polyoléfines B2 comprenant éventuellement une polyoléfine fonctionnalisée B1. La polyoléfine peut être par exemple un polypropylène mélangé avec un copolymère EPR ou EPDM ; ce dernier pouvant éventuellement être plastifié ou réticulé en cours de mélangeage.

**Selon une autre forme de l'invention** les couches d'étanchéité comprennent dans cet ordre :
une couche intérieure formée d'au moins un polymère thermoplastique (A),
une couche de liant de coextrusion, ledit liant étant une polyoléfine fonctionnalisée portant une fonction acide carboxylique ou anhydride d'acide carboxylique éventuellement mélangée avec une polyoléfine non fonctionnalisée,
une couche de polyoléfine,
éventuellement une couche de liant de coextrusion,
une couche extérieure formée d'au moins un polymère thermoplastique (B).

Le liant éventuel disposé entre la couche de polyoléfine et la couche de polymère thermoplastique (B) peut être choisi dans la même famille que celui éventuellement disposé entre la couche de polyoléfine et la couche de polymère thermoplastique (A).

Le polymère thermoplastique (B) peut être choisi dans la même famille que (A), il peut être identique ou différent.

Les polymères des différentes couches peuvent contenir des additifs habituels tels que des antioxydants, des stabilisants.

L'épaisseur totale de ces couches d'étanchéité c'est à dire l'épaisseur de l'ensemble de la couche de polymère thermoplastique (A) du liant éventuel et de la couche de polyoléfine ou de l'ensemble de la couche de polymère thermoplastique (A) du liant éventuel, de la couche de polyoléfine, du liant éventuel et de la couche de polymère thermoplastique (B) peut être comprise entre 0,8 et 30 mm .

Ces flexibles peuvent être fabriqués par coextrusion. Puis ensuite on vient disposer à l'extérieur les couches de renfort et de protection. Si ces flexibles contiennent une couche intérieure en feuillard métallique enroulé alors on utilise un dispositif dit "en tête d'équerre" pour extruder les couches d'étanchéité sur ce feuillard enroulé.

### [Exemples]

On a utilisé les produits suivants:
**Rilsan® BESNO P40 TLO**: désigne un polyamide 11 plastifié de MVFI (Melt Volume Flow Index ou indice de fluidité en volume à l'état fondu) 3 cm3/10 min (à 235°C sous 10 kg) vendu par ATOFINA.
**Orevac®18334** : désigne un liant de coextrusion qui est un mélange cogreffé de polyéthylènes de MFI 1 g/ 10 min (190°C sous 2,16 kg) vendu par ATOFINA.
**Lacqtène®2001 TN 46** : désigne un polyéthylène haute densité de densité 0,945 et MVFI 0,6 (190°C sous 5 kg) vendu par ATOFINA.

On a fabriqué par coextrusion à l'aide d'une tête de coextrusion multicouches les tubes de structures suivantes qui représentent les couches d'étanchéité de flexibles off shore.

### Exemple I

Tube monocouche en Rilsan® Besno P40 TLO, avant extrusion les granulés de PA 11 ont été traités pour en extraire les oligomères.

### Exemple II

tricouche : Rilsan® Besno P40 TLO 800 µm / Orevac® 18334 50 µm / Lacqtène® 2001 TN46 150 µm

### Exemple III

Tricouche : Rilsan® Besno P40 TLO 650 µm / Orevac® 18334 50 µm / Lacqtène® 2001 TN46 300 µm

### Exemple IV

5 couches : Rilsan® Besno P40 TLO / Orevac® 18334 / Lacqtène® 2001 TN46 / Orevac® 18334 / Rilsan® Besno P40 TLO
d'épaisseurs : 300 µm / 50 µm / 300 µm / 50 µm / 300 µm

### Exemple V

5 couches : Rilsan® Besno P40 TLO / Orevac® 18334 / Lacqtène® 2001 TN46 / Orevac® 18334 / Rilsan® Besno P40 TLO
d'épaisseurs : 375 µm / 50 µm / 150 µm / 50 µm / 375 µm

Les tubes ont été remplis de méthanol et conservés à 60°C dans une étuve ventilée, par la mesure du poids on a déterminé la perte en méthanol. On a aussi mesuré la résistance à la traction et la pression d'éclatement pour determiner la résistance des tubes. La force de pelage a aussi été mesurée pour montrer la résistance du liant au vieillissement.

Perméabilité au méthanol après 50 jours à 60°C:

| Exemple | I | II | III | IV | V |
|---|---|---|---|---|---|
| Permeabilité g / m².24h | 268 | 19 | 23 | 26 | 26 |

**Les tests de traction** ont été effectués sur un appareil Instron® 4302 à 23°C avec une vitesse de traction de 50 mm/min. La longueur de tube entre les machoires est 100 mm.

Résultats sur tubes non vieillis:

| Exemple | I | II | III | IV | V |
|---|---|---|---|---|---|
| contrainte au seuil d'écoulement (MPa) | 38,8 | 35,4 | 33,3 | 34,2 | 32,2 |
| Elongation à la rupture (%) | 275 | 348 | 246 | 246 | 239 |

**Conditions du test d'éclatement** : selon la norme DIN 73378 à 23°C, les tubes de 23 cm de long sont remplis d'huile et mis dans l'air.

**Résultats des tests d'éclatement (tubes non vieillis) :**

| Exemple | I | II | III | IV | V |
|---|---|---|---|---|---|
| pression (bar) | 61,9 | 55,8 | 58,4 | 57,8 | 58,1 |
| contrainte (MPa) | 21,5 | 19,4 | 20,3 | 20,1 | 20,2 |

**Tests de vieillissement** : les tubes des exemples I, Il et IV ont été testés, l'allongement à la rupture concerne la rupture de couche intérieure qui se romptla première . Dans les tubes multicouches d'autres couches peuvent présenter un plus grand allongement à la rupture ce qui est le cas des tubes de la présente invention.

**Allongement à la rupture :**

| vieillissement (h) | Exemple I | Exemple II | Exemple IV |
|---|---|---|---|
| 0 | 275 | 348 | 246 |
| 408 | 169 | 186 | 152 |
| 552 | 172 | 164 | 144 |
| 1008 | 163 | 177 | 127 |
| 1512 | 168 | 156 | 122 |
| 2256 | 160 | 148 | 125 |

**Eclatement des tubes exprimé par la contrainte (MPa) :**

| vieillissement (h) | Exemple I | Exemple II | Exemple IV |
|---|---|---|---|
| 0 | 21,5 | 19,4 | 20,1 |
| 408 | 21,2 | 20,7 | 19,5 |
| 552 | 21,3 | 20,7 | 19,5 |
| 1008 | 22,6 | 22,2 | 20,8 |
| 1512 | 23,4 | 22,9 | 21,2 |
| 2256 | 25,2 | 24,1 | 22,0 |

**Tests de pelage** : Ils ont été faits sur des bandes de 10 mm de long à 23°C à une vitesse de 200 mm/min.

**Résultats sur des tubes non vieillis :**

| | force de pelage |
|---|---|
| Exemple II | couche extérieure / liant : 23 N/cm |
| | liant / couche intérieure : pas d'initiation, excellente adhésion |
| Exemple III | pas d'initiation, excellente adhésion |
| Exemple IV | pas d'initiation, excellente adhésion |
| Exemple V | couche extérieure / liant : 28 N/cm |
| | liant / couche intérieure : 37 N/cm |

**Résultats sur le tube de l'exemple IV :**

| vieillissement (h) | force de pelage |
|---|---|
| 1008 | couche extérieure / liant : 8,1 N/cm |
| | liant / couche intérieure : 11,0 N/cm |
| 1512 | couche extérieure / liant : 8,7 N/cm |
| | liant / couche intérieure : 11,7 N/cm |
| 2256 | couche extérieure / liant : 6,2 N/cm |
| | liant / couche intérieure : 11,2 N/cm |

## Revendications

1. Utilisation de tuyaux flexibles pour l'exploitation des gisements de pétrole ou de gaz sous la mer (offshore) dans lesquels les couches d'étanchéité comprennent dans cet ordre :
• une couche intérieure formée d'au moins un polymère thermoplastique (A), ledit polymère thermoplastique (A) étant choisi parmi les mélanges de polyamide et de polyoléfine à matrice polyamide, les copolymères à blocs polyamide et blocs polyether, les mélanges de polyamides et de copolymères à blocs polyamide et blocs polyether, les polyetheresters, les polyuréthanes et les polyamides, ces polyamides étant choisis parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12,
• une couche de liant de coextrusion, ledit liant étant une polyoléfine fonctionnalisée portant une fonction acide carboxylique ou anhydride d'acide carboxylique éventuellement mélangée avec une polyoléfine non fonctionnalisée,
• une couche de polyoléfine.

2. Utilisation selon la revendication 1, les couches d'étanchéité comprenant en plus du côté de la couche de polyoléfine dans cet ordre :
• éventuellement une couche de liant de coextrusion,
• une couche extérieure formée d'au moins un polymère thermoplastique (B).

3. Utilisation selon la revendication 2 dans laquelle le polymère (B) est choisi parmi les polyamides, les mélanges de polyamide et de polyoléfine à matrice polyamide, les copolymères à blocs polyamide et blocs polyether, les mélanges de polyamides et de copolymères à blocs polyamide et blocs polyether, les polyetheresters et les polyuréthanes.

4. Utilisation selon la revendication 3 dans laquelle les polyamides sont choisis parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12.

5. Utilisation selon l'une quelconque des revendications 1 à 4 dans laquelle le polyamide est plastifié.

6. Utilisation selon l'une quelconque des revendications précédentes dans laquelle la polyoléfine de la couche de polyoléfine est du polyéthylène haute densité.

7. Utilisation selon l'une quelconque des revendications précédentes dans laquelle les tuyaux flexibles comprennent une couche intérieure métallique non étanche.

8. Utilisation selon l'une quelconque des revendications précédentes dans laquelle les tuyaux flexibles comprennent des couches extérieures de renfort et de protection.

9. Utilisation selon l'une quelconque des revendications précédentes pour transporter des fluides sur les champs d'extraction de pétrole et de gaz off shore.

## Patentansprüche

1. Verwendung von flexiblen im Meer (offshore), wobei die Dichtungsschichten, in dieser Reihenfolge, Folgendes umfassen:
• eine aus mindestens einem thermoplastischen Polymer (A) gebildete Innenschicht, wobei das thermoplastische Polymer (A) ausgewählt ist aus Mischungen von Polyamid und Polyolefin mit Polyamidmatrix, Copolymeren mit Polyamidblöcken und Polyetherblöcken, Mischungen von Polyamiden und Copolymeren mit Polyamidblöcken und Polyetherblöcken, Polyetherestern, Polyurethanen und Polyamiden, wobei diese Polyamide ausgewählt sind aus PA 11, PA 12, aliphatischen Polyamiden, die aus der Kondensation eines aliphatischen Amins mit 6 bis 12 Kohlenstoffatomen und einer aliphatischen Disäure mit 9 bis 12 Kohlenstoffatomen resultieren, und Copolyamiden 11/12 mit entweder mehr als 90 % Motiven 11 oder mehr als 90 % Motiven 12,
• eine Coextrusionsbindemittelschicht, wobei das Bindemittel ein funktionalisiertes Polyolefin ist, das eine Carbonsäure- oder Carbonsäureanhydridfunktion trägt, gegebenenfalls gemischt mit einem nicht funktionalisierten Polyolefin,
• eine Polyolefinschicht.

2. Verwendung nach Anspruch 1, wobei die Dichtungsschichten zusätzlich vonseiten der Polyolefinschicht, in dieser Reihenfolge, Folgendes umfassen:
• gegebenenfalls eine Coextrusionsbindemittelschicht,
• eine aus mindestens einem thermoplastischen Polymer (B) gebildete Außenschicht.

3. Verwendung nach Anspruch 2, wobei das Polymer (B) ausgewählt ist aus Polyamiden, Mischungen von Polyamid und Polyolefin mit Polyamidmatrix, Copolymeren mit Polyamidblöcken oder Polyetherblöcken, Mischungen von Polyamiden und Copolymeren mit Polyamidblöcken und Polyetherblöcken, Polyetherestern und Polyurethanen.

4. Verwendung nach Anspruch 3, wobei die Polyamide ausgewählt sind aus PA 11, PA 12, aliphatischen Polyamiden, die aus der Kondensation eines aliphatischen Diamins mit 6 bis 12 Kohlenstoffatomen und einer aliphatischen Disäure mit 9 bis 12 Kohlenstoffatomen resultieren, und Copolyamiden 11/12 mit entweder mehr als 90 % Motiven 11 oder mehr als 90 % Motiven 12.

5. Verwendung nach einem der Ansprüche 1 bis 4, wobei das Polyamid plastifiziert ist.

6. Verwendung nach einem der vorstehenden Ansprüche, wobei das Polyolefin der Polyolefinschicht Polyethylen hoher Dichte ist.

7. Verwendung nach einem der vorstehenden Ansprüche, wobei die flexiblen Rohre eine metallische, nicht abdichtende Innenschicht umfassen.

8. Verwendung nach einem der vorstehenden Ansprüche, wobei die flexiblen Rohre Verstärkungs- und Schutzaußenschichten umfassen.

9. Verwendung nach einem der vorstehenden Ansprüche zum Transportieren von Fluiden auf Offshore-Erdöl- und Gasextraktionsfelder.

## Claims

1. Use of flexible pipes for the exploitation of underwater (offshore) oil and gas deposits wherein the sealing layers comprise, in the following order:
• an inner layer formed from at least one thermoplastic polymer (A), said thermoplastic polymer (A) being chosen among mixtures of polyamide and polyolefin with polyamide matrix, polyamide block and polyether block copolymers, mixtures of polyamides and polyamide block and polyether block copolymers, polyetheresters, polyurethanes, and polyamides, these polyamides being chosen among PA 11, PA 12, aliphatic polyamides resulting from the condensation of an aliphatic diamine having 6 to 12 carbon atoms and an aliphatic di-acid having from 9 to 12 carbon atoms, and the 11/12 copolyamides having either more than 90 % 11 motifs or more than 90 % 12 motifs,
• a layer of coextrusion binder, said binder being a functionalized polyolefin bearing a carboxylic acid or carboxylic acid anhydride function optionally mixed with a non-functionalized polyolefin,
• a layer of polyolefin.

2. The use according to claim 1, the sealing layers also comprising, on the side of the polyolefin layer, in this order:
• optionally, a layer of coextrusion binder,
• an outer layer formed from at least one thermoplastic polymer (B).

3. The use according to claim 2, wherein polymer (B) is chosen from among polyamides, mixtures of polyamide and polyolefin with polyamide matrix, polyamide block and polyether block copolymers, mixtures of polyamides and polyamide block and polyether block copolymers, polyetheresters and polyurethanes.

4. The use according to claim 3, wherein the polyamides are chosen among PA 11, PA 12, aliphatic polyamides resulting from the condensation of an aliphatic diamine having 6 to 12 carbon atoms and an aliphatic di-acid having from 9 to 12 carbon atoms and 11/12 copolyamides having either more than 90 % 11 motifs or more than 90 % 12 motifs.

5. The use according to any one of claims 1 to 4, wherein the polyamide is plasticized.

6. The use according to any one of the preceding claims, wherein the polyolefin of the polyolefin layer is high-density polyethylene.

7. The use according to any one of the preceding claims, wherein the flexible pipes comprise an unsealed metal inner layer.

8. The use according to any one of the preceding claims, wherein the flexible pipes comprise reinforcing and protective outer layers.

9. The use according to any one of the preceding claims to transport fluids over offshore oil and gas extraction fields.
